# EUROPEAN PATENT SPECIFICATION

(11) **EP 2 203 800 B1**
(45) Date of publication and mention of the grant of the patent: **31.10.2012**
(21) Application number: 08806222.9
(22) Date of filing: 10.09.2008
(51) Int. Cl.: G06F 3/041, H01R 13/66, A41D 1/00, G06F 1/16

(54) **INTERFACING SENSORS TO A PROCESSING DEVICE**
ANSCHALTEN VON SENSOREN AN EINE VERARBEITUNGSEINRICHTUNG
CAPTEURS D'INTERFACE POUR DISPOSITIF DE TRAITEMENT

(30) Priority: 11.09.2007 GB 0717666
(43) Date of publication of application: 07.07.2010
(73) Proprietor: Peratech Limited, Brompton on Swale Richmond DL10 7JH (GB)
(72) Inventor: WALKINGTON, Stuart, Mark, St Albans AL3 4LZ (GB)
(74) Representative: Atkinson, Ralph
(86) International application number: PCT/GB2008/003060
(87) International publication number: WO 2009/034313

(56) References cited:
- WO-A-02/47215
- DE-A1-102005 049 483
- FR-A1- 2 472 309
- JP-A- 11 191 090
- US-A- 5 101 081
- US-A- 6 058 604
- US-A1- 2005 052 852
- US-B1- 6 339 831

## Description

The present invention relates to a position sensor of the type having a rigid connector connectable to an interface device for interfacing with a processing device.

An electrographic system is described in US 5101081 in which a graphics surface assembly has a graphics surface integrally coupled to a memory device which contains calibration data designated for the graphics surface. During manufacture, the memory device is mounted onto an interface board which is attached to the graphic surface through a flexible cable.

An input/output device defined as a pendent strap, is disclosed in US 2005/0052852. The strap incorporates at least one input portion and the connecting member includes a connector for the input portion and the portable information device.

A system for detecting the connection of an external device within a computer system is described in US 6339831. The external device has identification pins arranged in line at an end of a connector. Three pins in a connector of a subsystem connect with similar pins in a motherboard. The state of each pin may be made high or low thereby allowing binary numbers to be specified which in turn may be used to identify the nature of the device connected to facilitate plug and play operation.

A connection interface device for laboratory equipment is also described in WO 02/47215.

According to an aspect of the present invention, there is provided a position sensor of the aforesaid type, as defined by claim 1 appended hereto.

The invention will now be described by way of example only, with reference to the accompanying drawings, of which:
Figure 1 shows a position sensor;
Figure 2 shows a connector having a first connection state;
Figure 3 shows a connector of the type shown in Figure 2, having a second connection state;
Figure 4 illustrates how a connection state identifies a property of the fabric position sensor;
Figure 5 shows a variety of sensing configurations;
Figures 6, 7, 8 & 9 each shown an alternative arrangement for a connector to convey information;
Figure 10 shows a fabric sensor forming part of a pair of jeans;
Figure 11 shows an alternative pair of jeans having fabric controls; and
Figure 12 illustrates a rucksack having fabric controls.

### Figure 1

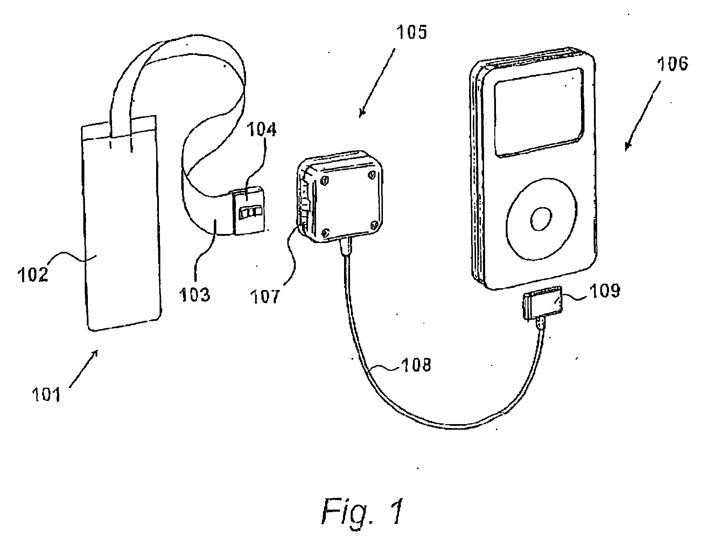

A position sensor having a rigid connector is shown in Figure 1. Position sensor 101 has a fabric sensing area 102, a fabric communication ribbon 103 and a rigid connector 104. The rigid connector 104 is connectable to an interface device 105 for interfacing with a processing device 106. When the position sensor 101 is connected to the interface device 105 and the processing device 106 is also connected to the interface device 105, it is possible for the processing device 106 to be controlled by manual operation of the fabric position sensor 101. As will be described further herein, the rigid connector 104 is configured to convey information to the processing device via the interface device that identifies a property of the sensor 101.

In an embodiment, the interface device includes a housing, for enclosing a processing circuit with analog ports and control ports and for supporting a first physical interface and a second physical interface. The first physical interface allows connection to a fabric sensor and the second physical interface allows connection to a processing device.

The interface device comprises a processor (preferably a micro-controller) that is configured to supply voltages to, and receive voltages from, connectors to the sensing area of the fabric position sensor. A program executed by the processor controls a mechanical interaction detection process. A voltage gradient is applied across a first conductive fabric layer. When a typical target pressure is applied, a conductive path is established between the first conductive fabric layer and a second conductive fabric layer. The actual voltage applied to the second conductive fabric layer will depend upon the position of the mechanical interaction from a predetermined origin on the first conductive fabric layer. This voltage can be measured to provide a positional co-ordinate of the mechanical interaction. The polarity of the first and second conductive layers may be reversed to provide a second positional co-ordinate of the mechanical interaction. WO 00/72239 A1 discloses a sensor and suitable control circuit operations for determining x axis or x and y axis co-ordinate data, optionally along with data relating to a further property of a mechanical interaction, for example pressure.

The first physical interface of the interface device takes the form of a socket 107 into which the connector 104 of fabric position sensor 101 may be received. The second physical interface may take the form of a cable 108 having a plug 109 that is insertable into an electronic device. In an alternative embodiment, the interface device Is configured to communicate with a processing device over a local wireless connection, such as in accordance with the Bluetooth protocol.

In an embodiment, the processing device is a personal music player having controllable variable operations, such as volume level, and controllable discrete operations, such as the starting and stopping of a track. I n an alternative embodiment the electronic device takes the form of a mobile telephone, possibly having the facility to play recorded audio signals. These audio signals may be of the type designated as MP3 but other formats may be used.

The interface device is configured to receive information conveyed by the rigid connector of a position sensor, the information identifying a property of the sensor. It is hence possible to enable a plurality of different position sensors to be connectable to an interface apparatus for interfacing with an electronic processing device.

### Figure 2

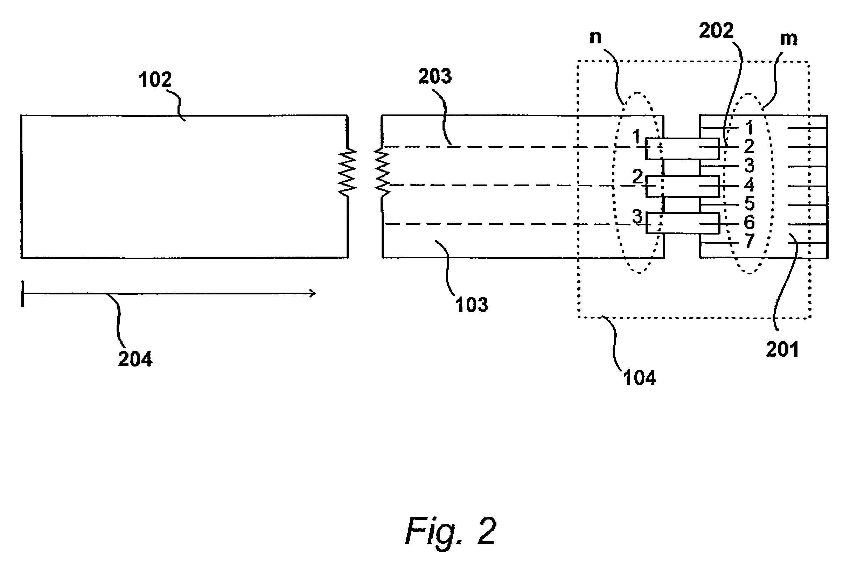

The fabric position sensor of Figure 1 is shown in further detail in Figure 2. Within connector 104, textile communication ribbon 103 is electrically connected to a PCB 201. The connector 104 has a plurality of terminals, such as terminal 202, that are each connectable to one of a plurality of conductors, such as conductor 203, present within the communication ribbon 103. The number of terminals available for connection to the communication ribbon is greater than the number of conductors present within the communication ribbon.

In the example illustrated in Figure 2, a total of seven (7) terminals are available to be connected. Electrical connection between a terminal and a conductor is made using solder, which is provided in a form enabling it to be crimped between conductor and terminal. In the shown arrangement, terminals 2, 4 and 6 are used to connect to a first, a second and a third conductor respectively. The connection of terminals to first, second and third conductors provides suitable connections for a sensor having the ability to identify a position in one dimension, for example along an axis 204 along sensing area 102.

### Figure 3

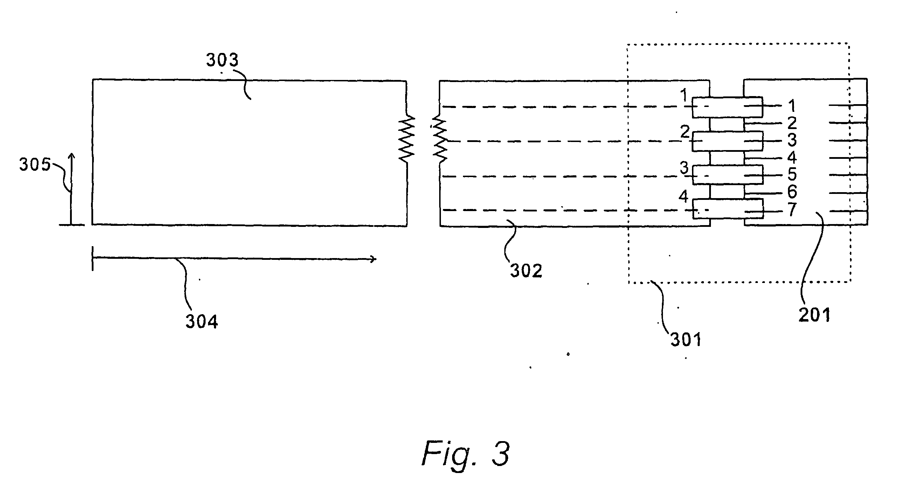

An alternative arrangement is illustrated in Figure 3, in which a different arrangement of connections between terminals and conductors within a connector 301 are made. In the shown arrangement, terminals 1, 3, 5 and 7 of PCB 201 are connected to a first, a second, a third and a fourth conductor respectively of fabric communication ribbon 302. The connection of terminals to first, second, third and fourth conductors provides suitable connections for a sensor having the ability to identify a position in two dimensions. Thus, for example the position of a mechanical interaction within sensing area 303 may be identified by a first co-ordinate with respect to axis 304 and by a second co-ordinate along a second axis 305. In this example, axis 305 is substantially perpendicular to axis 304, such that x and y axis co-ordinates may be identified. Information is conveyed by the particular selection of terminals that are connected to conductors, the information identifying a property of the sensing configuration of the sensor.

### Figure 4

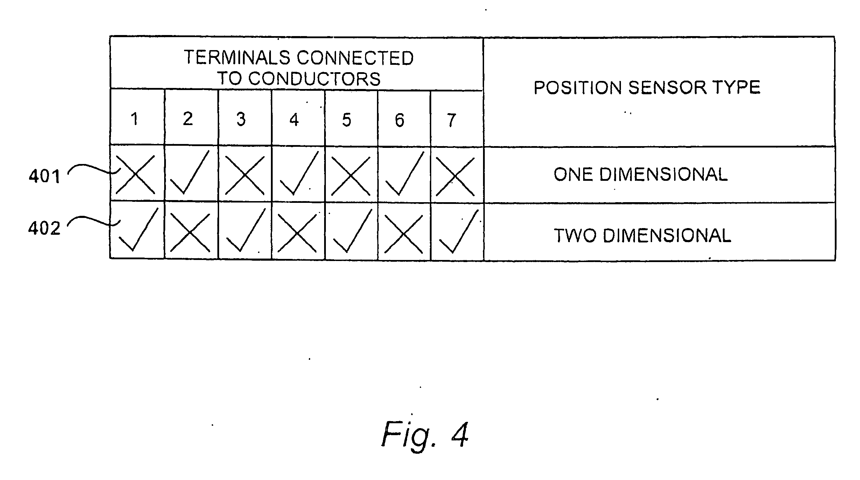

Figure 4 illustrates in tabular form how information may be conveyed by a connector by the particular selection of terminals that are connected to conductors within the connector.

With reference to the examples of Figure 3 and Figure 4, it can be seen that terminals that are connected for use with a one-dimensional position sensor (Figure 3) are not connected for use with a two-dimensional position sensor (Figure 4), and vice versa. At row 401 the connection of a first plurality of terminals, namely terminals 2, 4 and 6, to conductors indicates that the position sensor type is one-dimensional. At row 402, the connection of a second different plurality of terminals, namely terminals 1, 3, 5 and 7, to conductors indicates that the position sensor type is two-dimensional In this example, the connector may be perceived as having a first connection state (terminals 2, 4 and 6 connected) and a second connection state (terminals 1, 3, 5 and 7 connected).

Thus, the connector conveys information identifying a connection state of the rigid connector. The detection of which connection state the connector is in may in turn identify a property of the fabric position sensor. In this simple example, the connector conveys information identifying that the sensor has the ability to identify a position in one dimension or to identify a position in two dimensions. This information is provided to the interface device, hence, the interface device may use this information to distinguish between these two types of sensing area.

In alternative embodiments, different arrangements of terminal connections may be used. It is to be appreciated also that a different property of the sensor may be identified by the conveyed information.

In an alternative embodiment, a flexible circuit provides the position sensor and a wiring arrangement is utilised in place of a fabric communication ribbon. The flexible circuit sensor may be configured as a keypad. The keys of the keypad may be backlit, for example by use of one or more LED's.

### Figure 5

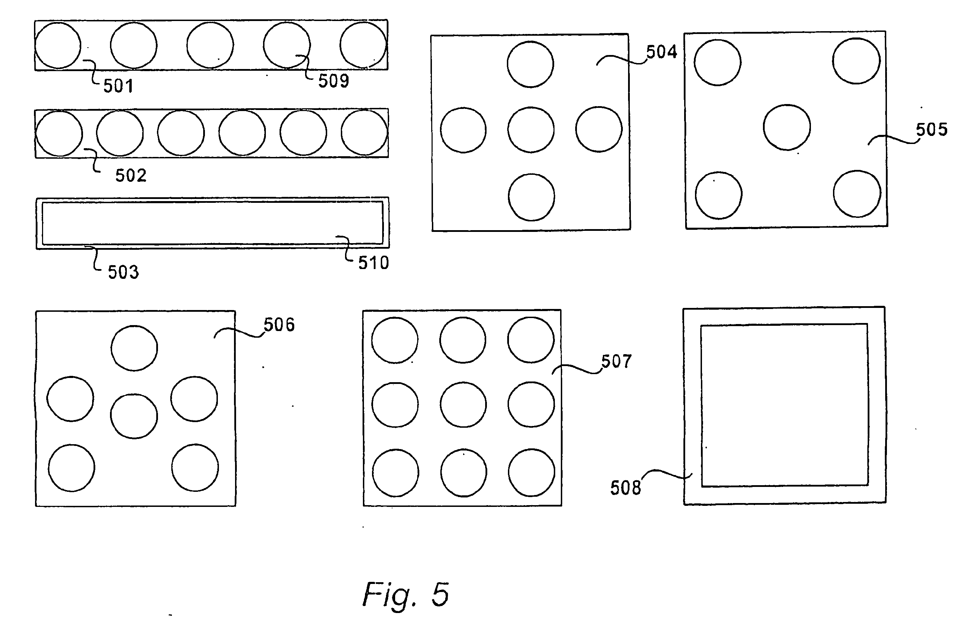

A variety of sensing configurations of a position sensing area is illustrated in Figure 5. Configurations 501 to 503 are each single axis sensing configurations, whilst sensing configurations 504, 505, 506, 507 and 508 are each double axis sensing configurations. A sensing configuration may have defined key positions, such as key position 509 of sensing configuration 501, indicating a region of the sensing area that is responsive to a manually applied press. Alternatively, or additionally, a sensing configuration may comprise a gesture recognition portion, such as gesture recognition portion 510 of sensing configuration 603, indicating a region of the sensing area that is sensitive to manually applied gestures, including swipe actions, stroke actions and scrolling actions.

In an embodiment, a sensing configuration presents a region that is responsive to both manually applied presses and gestures. A connector may therefore be configured to convey information that identifies the ability of the fabric position sensor to identify manually applied presses or to identify manually applied gestures. In this way, the rigid connector may convey information identifying a sensing configuration property of the sensor.

Sensing configurations 504 and 505 each present the same number of key positions within sensing areas having the same dimensions, however, the specific arrangement of key positions at 504 differs from the specific arrangement of key positions at 505. It can be seen that sensing configurations 504 and 505 each have a key position at a common location, whilst the remaining key positions are at locations individual to the respective sensing configurations.

### Figure 6

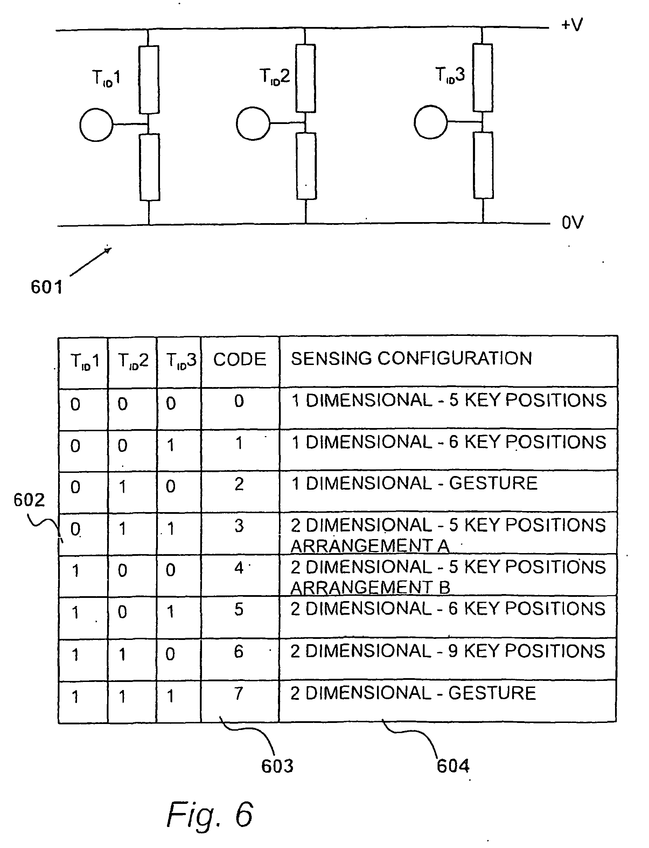

Figure 6 illustrates an alternative arrangement for conveying information from the connector that identifies a property of the position sensor. In this example, the PCB of the connector presents an arrangement of terminals, as illustrated at 601. A first terminal T_{ID}1 a second terminal T_{ID}2 and a third terminal T_{ID}3 are made available to each be placed in a condition giving either a high output (1) or a low output (0). The arrangement thus provides for digital identification of a property of a sensor.

In this example, the three (3) bits of information allows identification of one of eight (8) possible numerical combinations. As illustrated in table 602, each of the eight (8) possible combinations may be allotted a code, shown in column 603, from which it is possible to identify an assigned sensing configuration, shown in column 604.

The interface device may be pre-programmed with data mapping locations within a sensing area to functions of an electronic device. Thus, the interface device may be pre-programmed with data identifying a plurality of sensing configurations. The rigid connector of the fabric position sensor may then be configured to convey information allowing the sensing configuration to be identified as one of the plurality of sensing configurations stored by the interface device. Alternatively, each of said numerical combinations may be directly assigned to a sensing configuration.

### Figure 7

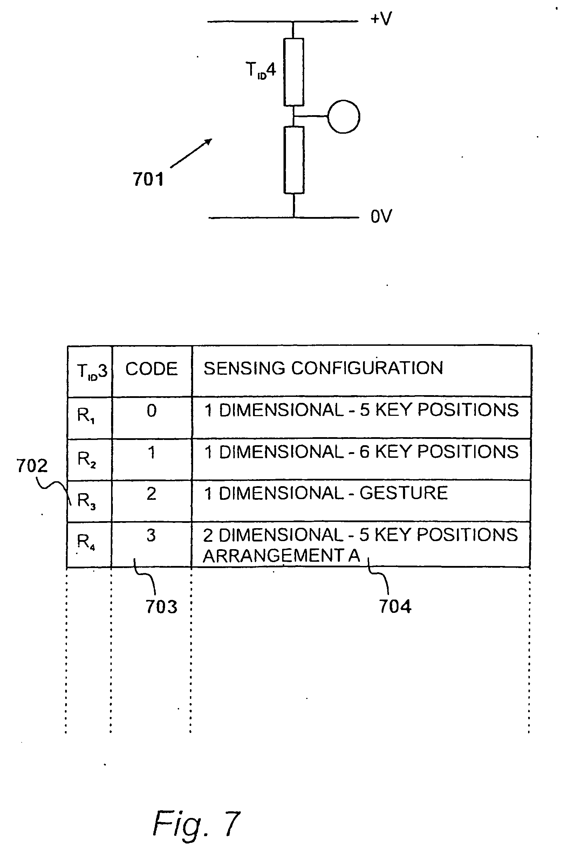

A further alternative arrangement for enabling information to be conveyed from the connector is illustrated in Figure 7. At 701, a voltage divider arrangement is illustrated, allowing a resistance to be measured at terminal T_{ID}4. The arrangement thus provides for analog identification of a property of the sensor.

As illustrated in table 702, each of a plurality of magnitude of resistance may be allotted a code, shown in column 703, from which it is possible to identify an assigned sensing configuration, shown in column 704. Again, each of said plurality of magnitudes of resistance may be directly assigned to a sensing configuration.

It is to be appreciated that the arrangement shown at 601 may be duplicated for each of a plurality of terminals. This approach may be used to increase the number of identifiable permutations of resistance magnitudes available for use in the identification of a property of a sensor.

### Figure 8

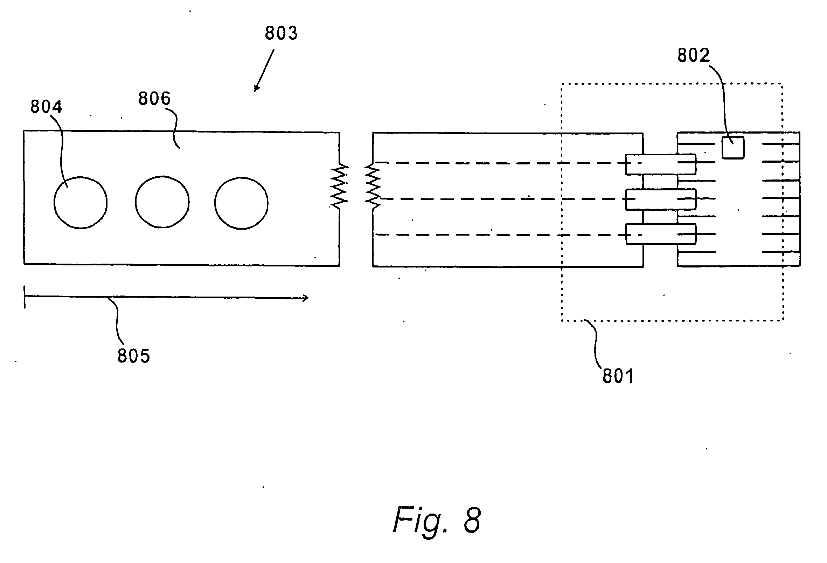

An alternative embodiment is illustrated in Figure 8, in which a connector 801 includes an identification chip 802. The identification chip may be a simple non-volatile memory device, for example a serial EEPROM. In the present example, the Identification chip 802 conveys data identifying a property of the position sensor 803.

For example, the number of key positions, such as key position 804, that are defined along sensing axis 805 of sensing area 806 could be identified by information conveyed by the identification chip 802. The interface device may then use this property of the sensor, for example, to refer to a lookup table to identify key position locations for a sensor having the identified number of key positions, and hence to determine the locations of the key positions for the connected fabric position sensor. The interface device may then refer to a lookup table linking locations within the sensing area to functions of an electronic device.

In some applications, the identification chip 802 may be used to convey that the fabric sensor 803 is an audio playback device controller or another type of device specific controller, for example, Other information that may be conveyed by an identification chip regarding a particular sensor could relate to a serial number, sensor calibration lookup table data, manufacture details such as date of manufacture, place of manufacture, manufacture batch code; along with other aspects relating to delivery, for example.

### Figure 9

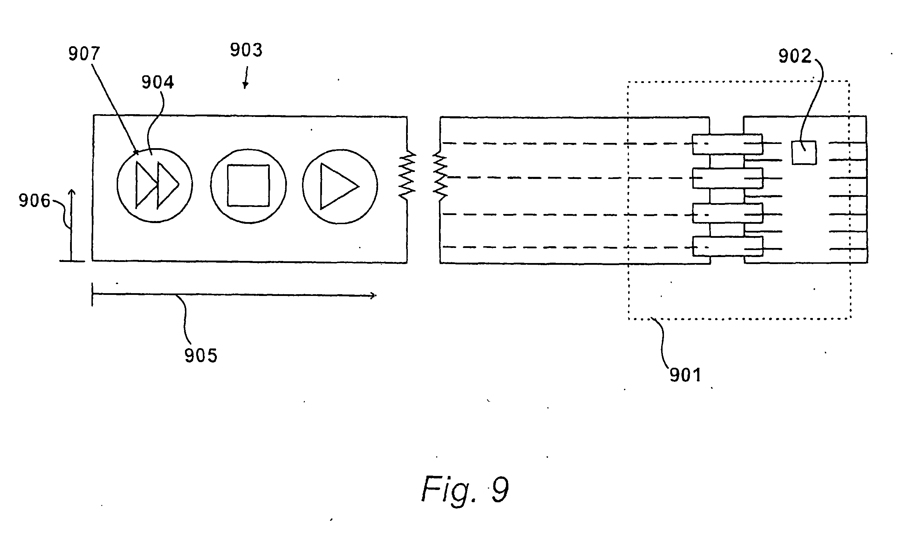

In the alternative embodiment of Figure 9, a connector 901 includes an identification chip 902. The identification chip may be a simple microprocessor.

It is to be appreciated that the assigned functionality of a particular key position within a sensing area of a fabric sensor 903 may vary between applications.

The identification chip 902 may be used to identify the location of key position 904, for example, with reference to a first axis 905 and a second axis 906, along with information indicating that the key position 904 displays a symbol 907 for a fast forward operation. In the present example, the identification chip conveys information in the form of lookup table data that links locations within the sensing area to functions for a particular type of electronic device.

In this way, the interface device is not required to be pre-programmed to identify many different sensing configurations, since the connector of each fabric position sensor may be configured to convey information relevant to the operational layout of the position sensing area.

This approach provides for fabric position sensors having a sensing configuration that is unknown to a particular type of interface device to be compatible with that particular type of interface device.

In some applications, the identification chip 902 may be used to convey that the sensing configuration of sensor 903 is for an audio playback device calibration lookup table data, manufacture details; along with other aspects relating to delivery, for example, controller or another type of device specific controller, for example. Other information that may be conveyed by an identification chip regarding a particular sensing configuration could relate to a serial number, sensor

### Figure 10

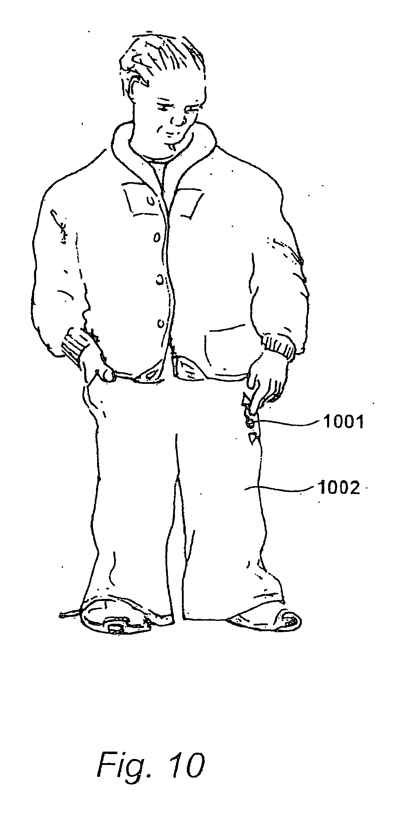

In Figure 10 a sensor 1001 having a substantially fabric construction is provided as part of a pair of jeans 1002. In this example, controls 1001 are mounted the outside of the item of clothing. It is possible for a user to adjust operation of an audio device or a mobile telephone, for example, using these controls. Alternatively, other personal items may be used, such as a jacket, a skirt, a shirt, a bag or a rucksack.

### Figure 11

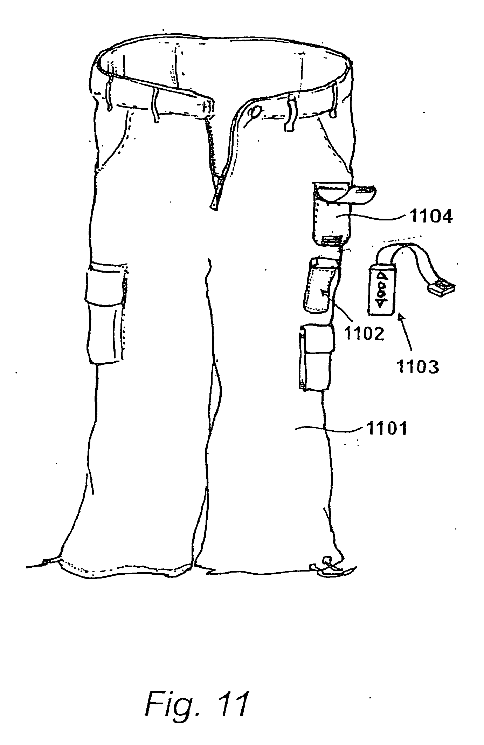

In the embodiment shown in Figure 11, a pair of jeans 1101 includes a pocket 1102 for receiving a position sensor 1103 and a pocket 1104 for receiving an interface device and/or an electronic processing device. Alternative securing means may be provided to enable the removable sensor 1103 to be releasably supported by the item of clothing.

### Figure 12

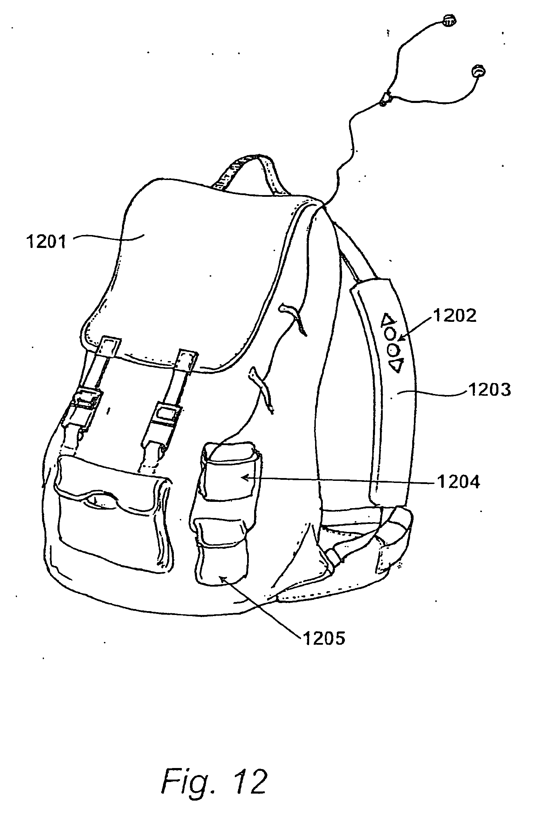

Figure 12 shows a sensor-enabled bag, in the form of a rucksack 1201. In this example, a sensing area 1202 is presented on a strap 1203. The rucksack 1201 is provided with a pocket 1204 for an interface device and a pocket 1205 for an electronic device.

The apparatus and method described for a connector to convey information to the interface device that identifies a property of the sensor, provides for a user to connect different position sensors to the interface device for interfacing with an electronic processing device. The appreciable benefit to the user is not only of convenience of use of the interfacing system but also reducing overall cost by providing a generic interface device that enables different sensors to be interfaced to a processing device.

## Claims

1. A position sensor (101) having a rigid connector (104) connectable to an interface device (105) for interfacing with a processing device (106),
said connector (104) is configured to convey information to said interface device (105), identifying a first property of the sensing configuration of said sensor (101);
**characterised in that**:
said sensor (101) has a fabric sensing area (102) and a fabric communication ribbon (103);
said connector (104) has a first plurality (m) of terminals (202) each connectable to a conductor (203) of said ribbon (103);
a second plurality (n) of conductors (203) are present within said ribbon (103), each one of said second plurality (n) of conductors being connected to one of said terminals and to said sensing area of said position sensor, but said second plurality (n) is less than said first plurality (m), (n < m); and
said information is conveyed by the particular selection of terminals that are connected to said conductors.

2. A sensor according to claim 1, wherein said first property is the ability of the sensor (101) to identify a position in one dimension or to identify a position in two dimensions.

3. A sensor according to claims 1 or claim 2, wherein said connector (801, 902) includes an identification chip (802, 902) and further information identifying a second property of said sensor is conveyed by said identification chip.

4. A sensor according to claim 1, wherein said first property is a sensing layout of said sensing area (102).

5. A sensor according to claim 1, wherein said first property is the ability of said sensor (101) to identify manually applied presses or manually applied gestures.

6. A sensor according to claim 1, wherein said sensor forms part of a personal item (1002, 1201).

7. A sensor according to claim 6, wherein said personal item is a jacket, trousers (1002), a skirt, a shirt, a bag or a rucksack (1201).

8. A sensor according to claim 1, wherein said sensor (101) is an audio playback device (106) controller.

9. A method of interfacing a fabric position sensor to a processing device, in which said fabric position sensor (101) has a rigid connector (104) connectable to an interface device (105) for interfacing with said processing device (106), and said connector (104) is configured to convey information to said interface device (105), identifying a first property of the sensing configuration of said sensor (101);
said method being **characterised by** the steps of:
providing said fabric position sensor (102) with a fabric communication ribbon (103) attached to a rigid connector (104) that is connectable to an interface device (105) for interfacing with said processing device (106); and
configuring said connector (104) to convey information to said interface device (105) identifying a property of the sensing configuration of said sensor, wherein:
said connector has a first plurality (m) of terminals (202) each connectable to a conductor (203) of said ribbon;
a second plurality (n) of conductors are present within said ribbon, each one of said second plurality (n) of conductors being connected to one of said terminals and to said fabric position sensor, but said second plurality (n) is less than said first plurality (m), (n < m); and
said information is conveyed by the particular selection of terminals that are connected to said conductors.

10. A method according to claim 9, wherein said property is the ability of the sensor (102) to identify a position in one dimension or to identify a position in two dimensions.

11. A method according to claim 9, wherein said property is a sensing layout of said sensor (102).

12. A method according to claim 10, wherein said property is the ability of said sensor (102) to identify manually applied presses or manually applied gestures.

13. A method according to claim 10, wherein said sensor forms part of an item of clothing (1002).

14. A method according to claim 13, wherein said sensor is removable from said item of clothing (1002).

15. A method according to claim 9, wherein said processing device (106) is an audio playback device or a mobile telephone.

16. An interface device (105), **characterised by**:
a processing circuit with analogue ports and control ports; and
a housing, for enclosing said processing circuit and for supporting a first physical interface (107) and a second physical interface (108,109);
said first physical interface (107) is connected to said analogue ports and is connectable to a rigid connector (104) of a fabric position sensor (101) having a sensing area (102) and a communication ribbon (103);
said second physical interface is connected to said control ports and is connectable to a processing device (106), such that when connected said interface device (105) allows the processing device (106) to be controlled by the fabric position sensor (101), wherein:
said interface device (105) is configured to receive information conveyed by said connector (104), identifying a property of the sensing configuration of said fabric position sensor (101) by means of:
said connector (104) having a first plurality (m) of terminals (202) each connectable to a conductor (203) of said ribbon (103);
a second plurality (n) of conductors (203) being present within said ribbon (103), each one of said second plurality (n) of conductors (203) being connected to one of said terminals (202) and to said sensing area (102) of said position sensor (101), but with said second plurality (n) being less than said first plurality (m), (n < m); and
by said information being conveyed by the particular selection of terminals (202) that are connected to said conductors (203).

17. An interface device (105) according to claim 16, wherein said processing circuit is a programmable micro-controller and said interface device (105) is pre-programmed with data linking locations within said sensing area (102) to functions of said processing device (106).

## Patentansprüche

1. Positionssensor (101) mit einem festen Verbinder (104), der mit einem Schnittstellengerät (105) verbunden werden kann, um eine Schnittstelle zu einem Verarbeitungsgerät (106) zu bilden,
wobei der Verbinder (104) konfiguriert ist, um an das Schnittstellengerät (105) eine Information zu übermitteln, die eine erste Eigenschaft der Erfassungskonfiguration des Sensors (101) identifiziert;
**dadurch gekennzeichnet, dass**
der Sensor (101) einen Gewebeerfassungsbereich (102) und ein Gewebekommunikationsband (103) aufweist;
der Verbinder (104) eine Vielzahl (m) von Anschlüssen (202) aufweist, die jeweils mit einem Leiter (203) des Bandes (103) verbunden werden können;
eine zweite Vielzahl (n) von Leitern (203) innerhalb des Bandes (103) vorhanden ist, wobei jeder der zweiten Vielzahl (n) von Leitern mit einem der Anschlüsse und dem Erfassungsbereich des Positionssensors verbunden ist, wobei jedoch die zweite Vielzahl (n) kleiner ist als die erste Vielzahl (m), (n < m); und
die Information übertragen wird durch die bestimmte Auswahl der Anschlüsse, die mit den Leitern verbunden werden.

2. Sensor gemäß Anspruch 1, wobei die erste Eigenschaft die Fähigkeit des Sensors (101) zur Identifizierung einer Position in einer Dimension oder zur Identifizierung einer Position in zwei Dimensionen ist.

3. Sensor gemäß Anspruch 1 oder Anspruch 2, wobei der Verbinder (801, 902) einen Identifikationschip (802, 902) enthält und von dem Identifikationschip eine weitere Information übertragen wird, die eine zweite Eigenschaft des Sensors identifiziert.

4. Sensor gemäß Anspruch 1, wobei die erste Eigenschaft ein Erfassungslayout des Erfassungsbereichs (102) ist.

5. Sensor gemäß Anspruch 1, wobei die erste Eigenschaft die Fähigkeit des Sensors (101) zur Identifizierung von manuell abgegebenen Drücken oder manuell abgegebenen Gesten ist.

6. Sensor gemäß Anspruch 1, wobei der Sensor einen Teil eines persönlichen Gegenstands (1002, 1201) bildet.

7. Sensor gemäß Anspruch 6, wobei der persönliche Gegenstand ein Jackett, eine Hose (1002), ein Rock, ein Hemd, eine Tasche oder ein Rucksack (1201) ist.

8. Sensor gemäß Anspruch 1, wobei der Sensor (101) ein Steuergerät eines Audiowiedergabegeräts (106) ist.

9. Verfahren zur Bildung einer Schnittstelle zwischen einem Gewebepositionssensor und einem Verarbeitungsgerät, in dem der Gewebepositionssensor (101) einen festen Verbinder (104) aufweist, der mit einem Schnittstellengerät (105) verbunden werden kann, um eine Schnittstelle mit dem Verarbeitungsgerät (106) zu bilden, und wobei der Verbinder (104) konfiguriert ist, um an das Schnittstellengerät (105) Informationen zu übermitteln, die eine ersten Eigenschaft der Erfassungskonfiguration des Sensors (101) identifizieren;
wobei das Verfahren charakterisiert ist durch die Schritte:
Bereitstellen des Gewebepositionssensors (102) mit einem Gewebekommunikationsband (103), das an einem festen Verbinder (104) angebracht ist, der mit einem Schnittstellengerät (105) verbunden werden kann, um eine Schnittstelle mit dem Verarbeitungsgerät (106) zu bilden; und
Konfigurieren des Verbinders (104) zum Übertragen einer Information an das Schnittstellengerät (105), die eine Eigenschaft der Erfassungskonfiguration des Sensors identifiziert, wobei:
der Verbinder eine erste Vielzahl (m) von Anschlüssen (202) aufweist, die jeweils mit einem Leiter (203) des Bandes verbunden werden können;
eine zweite Vielzahl (n) von Leitern in dem Band vorhanden ist, wobei jeder der zweiten Vielzahl (n) von Leitern mit einem der Anschlüsse und dem Gewebepositionssensor verbunden ist, wobei jedoch die zweite Vielzahl (n) kleiner ist als die erste Vielzahl (m), (n < m); und
die Information übertragen wird durch die bestimmte Auswahl der Anschlüsse, die mit den Leitern verbunden werden.

10. Verfahren gemäß Anspruch 9, wobei die Eigenschaft die Fähigkeit des Sensors (102) zur Identifizierung einer Position in einer Dimension oder zur Identifizierung einer Position in zwei Dimensionen ist.

11. Verfahren gemäß Anspruch 9, wobei die Eigenschaft ein Erfassungslayout des Sensors (102) ist.

12. Verfahren gemäß Anspruch 10, wobei die Eigenschaft die Fähigkeit des Sensors (102) zur Identifizierung von manuell abgegebenen Drücken oder manuell abgegebenen Gesten ist.

13. Verfahren gemäß Anspruch 10, wobei der Sensor einen Teil eines Bekleidungsgegenstandes (1002) bildet.

14. Verfahren gemäß Anspruch 13, wobei der Sensor von dem Bekleidungsgegenstand (1002) entfernt werden kann.

15. Verfahren gemäß Anspruch 9, wobei das Verarbeitungsgerät (106) ein Audiowiedergabegerät oder ein Mobiltelefon ist.

16. Schnittstellengerät (105), **gekennzeichnet durch**:
eine Verarbeitungsschaltung mit analogen Anschlüssen und Steueranschlüssen; und
ein Gehäuse zum Einschließen der Verarbeitungsschaltung und zum Tragen einer ersten physischen Schnittstelle (107) und einer zweiten physischen Schnittstelle (108, 109);
wobei die erste physische Schnittstelle (107) mit den analogen Anschlüssen verbunden ist und mit einem festen Verbinder (104) eines Gewebepositionssensors (101) verbunden werden kann, der einen Erfassungsbereich (102) und ein Kommunikationsband (103) aufweist;
wobei die zweite physische Schnittstelle mit den Steueranschlüssen verbunden ist und mit einem Verarbeitungsgerät (106) verbunden werden kann, so dass das Schnittstellengerät (105) dem Verarbeitungsgerät (106) erlaubt, von dem Gewebepositionssensor (101) gesteuert zu werden, wenn es verbunden ist, wobei:
das Schnittstellengerät (105) konfiguriert ist, um eine von dem Verbinder (104) übermittelte Information zu empfangen, die eine Eigenschaft der Erfassungskonfiguration des Gewebepositionssensors (101) identifiziert **durch**:
der Verbinder (104) weist eine erste Vielzahl (m) von Anschlüssen (202) auf, die jeweils mit einem Leiter (203) des Bandes (103) verbunden werden können;
eine zweite Vielzahl (n) von Leitern (203) ist innerhalb des Bandes (103) vorhanden, wobei jeder der zweiten Vielzahl (n) von Leitern (203) mit einem der Anschlüsse (202) und dem Erfassungsbereich (102) des Positionssensors (101) verbunden ist, wobei jedoch die zweite Vielzahl (n) kleiner ist als die erste Vielzahl (m), (n < m); und
**durch** die Information, die übertragen wird **durch** die bestimmte Auswahl der Anschlüsse (202), die mit den Leitern (203) verbunden werden.

17. Schnittstellengerät (105) gemäß Anspruch 16, wobei die Verarbeitungsschaltung ein programmierbarer Mikrocontroller ist und das Schnittstellengerät (105) vorprogrammiert ist mit Datenverbindungsstellen innerhalb des Erfassungsbereichs (102) zu Funktionen des Verarbeitungsgeräts (106).

## Revendications

1. Capteur (101) de position ayant un connecteur (104) rigide pouvant être connecté à un dispositif (105) d'interface pour faire l'interface avec un dispositif (106) de traitement,
le connecteur (104) étant configuré pour acheminer de l'information au dispositif (105) d'interface, identifiant une première propriété de la configuration de détection du capteur (101) ;
caractérisé en ce :
le capteur (101) a une zone (102) de détection de tissu et un ruban (103) de communication de tissu ;
le connecteur (104) a une première pluralité (m) de bornes (202), chacune pouvant être connectée à un conducteur (203) du ruban (103) ;
une deuxième pluralité (n) de conducteurs (203) sont présents au sein du ruban (103), chacun de la deuxième pluralité (n) de conducteurs étant relié à l'une des bornes et à la zone de détection du capteur de position, mais la deuxième pluralité (n) étant plus petite que la première pluralité (m), (n < m) ; et
l'information est acheminée par la sélection particulière de bornes qui sont reliées aux conducteurs.

2. Capteur suivant la revendication 1, dans lequel la première propriété est l'aptitude du capteur (101) à identifier une position dans une dimension ou à identifier une position dans deux dimensions.

3. Capteur suivant la revendication 1 ou 2, dans lequel le connecteur (801, 802) comprend une puce (802, 902) d'identification et de l'information supplémentaire identifiant une deuxième propriété du capteur est acheminée par la puce d'identification.

4. Capteur suivant la revendication 1, dans lequel la première propriété est un agencement de détection de la zone (102) de détection.

5. Capteur suivant la revendication 1, dans lequel la première propriété est l'aptitude du capteur (101) à identifier des appuis appliqués manuellement ou des gestes appliqués manuellement.

6. Capteur suivant la revendication 1, dans lequel le capteur forme une partie d'un objet (1002, 1201) personnel.

7. Capteur suivant la revendication 6, dans lequel l'objet personnel est une veste, un pantalon (1002), une jupe, une chemise, un sac ou un sac à dos (1201).

8. Capteur suivant la revendication 1, dans lequel le capteur (101) est une unité de commande d'un dispositif (106) de préenregistrement audio.

9. Procédé pour faire l'interface d'un capteur de position de tissu avec un dispositif de traitement, dans lequel le capteur (101) de position de tissu a un connecteur (104) rigide pouvant être connecté à un dispositif (105) d'interface pour faire l'interface avec le dispositif (106) de traitement, et le connecteur (104) est configuré pour acheminer au dispositif (105) de l'information, identifiant une première propriété de la configuration de détection du capteur (101) ;
le procédé étant **caractérisé par** les stades dans lesquels :
on se procure le capteur (102) de position de tissu avec un ruban (103) de communication de tissu adjoint à un connecteur (104) rigide, qui peut être connecté à un dispositif (105) d'interface pour faire l'interface avec le dispositif (106) de traitement ; et
on configure le connecteur (104) pour acheminer au dispositif (105) d'interface de l'information identifiant une propriété de la configuration de détection du capteur, dans lequel :
le connecteur (104) a une première pluralité (m) de bornes (202), chacune pouvant être connectée à un conducteur (203) du ruban (103) ;
une deuxième pluralité (n) de conducteurs (203) sont présents au sein du ruban (103), chacun de la deuxième pluralité (n) de conducteurs étant relié à l'une des bornes et à la zone de détection du capteur de position, mais la deuxième pluralité (n) étant plus petite que la première pluralité (m), (n < m) ; et
l'information est acheminée par la sélection particulière de bornes qui sont reliées aux conducteurs.

10. Procédé suivant la revendication 9, dans lequel la propriété est l'aptitude du capteur (101) à identifier une position dans une dimension ou à identifier une position dans deux dimensions.

11. Procédé suivant la revendication 9, dans lequel la propriété est un agencement de détection du capteur (102).

12. Procédé suivant la revendication 10, dans lequel la propriété est l'aptitude du capteur (102) à identifier des appuis appliqués manuellement ou des gestes appliqués manuellement.

13. Procédé suivant la revendication 10, dans lequel le capteur forme une partie d'un vêtement (1002).

14. Procédé suivant la revendication 13, dans lequel le capteur peut être retiré du vêtement (1002).

15. Procédé suivant la revendication 9, dans lequel le dispositif (106) de traitement est un dispositif de préenregistrement audio ou un téléphone mobile.

16. Dispositif (105) d'interface, **caractérisé par** :
un circuit de traitement ayant des accès analogiques et des accès de commande ; et
un boîtier pour enfermer le circuit de traitement et pour supporter une première interface (107) physique et une deuxième interface (108, 109) physique ;
la première interface (107) physique est reliée aux accès analogiques et peut être reliée à un connecteur (104) rigide d'un capteur (101) de position de tissu ayant une zone (102) de détection et un ruban (103) de communication ;
la deuxième interface physique est reliée aux accès de commande et peut être reliée à un dispositif (106) de traitement de manière à ce que, lorsqu'elle est reliée, le dispositif (105) d'interface permette au dispositif (106) de traitement d'être commandé par le capteur (101) de position de tissu, dans lequel :
le dispositif (105) d'interface est configuré pour recevoir de l'information acheminée par le conducteur (104), identifiant une propriété de la configuration de détection du capteur (101) de position de tissu au moyen du fait :
que le connecteur (104) a une première pluralité (m) de bornes (202), chacune pouvant être reliée à un conducteur (203) du ruban (103) ;
une deuxième pluralité (n) de conducteurs (203) étant présente au sein du ruban (103), chacun de la deuxième pluralité (n) de conducteurs (203) étant relié à l'une des bornes (202) et à la zone (102) de détection du capteur (101) de position, mais la deuxième pluralité (n) étant plus petite que la première pluralité (m), (n < m) ; et
que l'information est acheminée par la sélection particulière de bornes (202) qui sont reliées aux conducteurs (203).

17. Dispositif (105) d'interface suivant la revendication 16, dans lequel l'unité de traitement est une micro-unité de commande programmable et le dispositif (105) d'interface est préprogrammé par des emplacements de liaison de données dans la zone (102) de détection pour des fonctions du dispositif (106) de traitement.
